# EUROPÄISCHE PATENTSCHRIFT

(11) **EP 0 559 848 B1**
(45) Veröffentlichungstag und Bekanntmachung des Hinweises auf die Patenterteilung: **03.01.2001**
(21) Anmeldenummer: 92909750.9
(22) Anmeldetag: 22.05.1992
(51) Int. Cl.: B62D 31/00

(54) **MOTORFAHRZEUG**
MOTOR VEHICLE
VEHICULE A MOTEUR

(30) Priorität: 22.05.1991 CH 150391
(43) Veröffentlichungstag der Anmeldung: 15.09.1993
(73) Patentinhaber: Salzmann, Willy Ernst, 6300 Zug (CH)
(72) Erfinder: Salzmann, Willy Ernst, 6300 Zug (CH)
(74) Vertreter: Münch, Otto, Dipl.-Ing.
(86) Internationale Anmeldenummer: CH9200098
(87) Internationale Veröffentlichungsnummer: WO9220563

(56) Entgegenhaltungen:
- EP-A- 0 097 622
- WO-A-88/06675
- BE-A- 448 796
- DE-A- 1 480 427
- DE-A- 2 118 506
- DE-A- 2 241 652
- DE-A- 3 442 574
- DE-C- 854 466
- FR-A- 974 988
- FR-A- 1 565 920
- FR-A- 2 120 386
- FR-A- 2 347 226
- FR-A- 2 424 845
- GB-A- 673 608
- GB-A- 775 405
- GB-A- 1 184 031
- US-A- 3 352 597
- US-A- 4 650 023
- PATENT ABSTRACTS OF JAPAN vol. 7, no. 217 (M-245)[1362] 27. September 1983 & JP,A,58110379 (YAMAHA) 30. Juni 1983

## Beschreibung

Die Erfindung bezieht sich auf ein Motorfahrzeug nach dem Oberbegriff des Anspruchs 1.

### Stand der Technik

Bei einem bekannten Motorfahrzeug [DE 21 18 506 - MOLLERUS] mit einer schräg nach hinten unten verlaufenden Wand im Fussbereich des Fahrers bzw. Beifahrers, die ausgehend vom hinter der Vorderachse liegenden Ende des Fahrgastraumbodens schräg nach vorn und nach oben verlaufend oberhalb der Fahrzeugachse liegt, ist der Fahrgastraum als eine in sich geschlossene Einheit mit verstärkter, zumindest im vorderen Bereich nach oben gezogener Bodenplatte soweit von der Fahrbahn entfernt, dass beim Zusammenstoss mit einem Personenfahrzeug herkömmlicher Bauart der Fahrgastraum mit der verstärkten, nach oben gezogenen Bodenplatte auf die Motorhaube oder den Kofferraum des Kollisionspartners gleiten kann. Damit wird die Bewegungsenergie ausschliesslich von dem Fahrzeugteil unterhalb des Fahrgastraumes aufgenommen. Dabei ist die Motor- und Fahrwerksaufhängung derart mit der verstärkten Bodenplatte des Fahrgastraumes verbunden, dass der Fahrgastraum selbst keine unzulässigen Belastungen erfährt. Damit sind praktisch zwei separate Einheiten geschaffen: eine Fahrgastzelle und eine darunterliegende Unterflureinheit, die die Fahrgestell- und Antriebseinheit umfasst, wobei sich im Kollisionsfall die Fahrgastzelle von der Unterflureinheit weitgehend trennen kann.

Bei dieser Ausführung eines Motorfahrzeuges ist jedoch nachteilig, dass der Schwerpunkt desselben sehr hoch liegt, was die Fahreigenschaften, insbesondere die Kurvenstabilität, sehr nachteilig beeinflusst. Zudem ist dadurch das Fahrwerk wesentlich schwieriger auszulegen, um gleich gute Fahreigenschaften, insbesondere in Kurven, zu erreichen. Darüberhinaus ist der Einstieg für die Passagiere nicht mehr in der üblichen Weise und nur erschwert möglich. Dies wirkt sich insbesondere bei behinderten Fahrgästen nachteilig aus. Ausserdem ist die Ausbildung der Verbindung von Unterflurgruppe und Fahrgastzelle insofern heikel, da sie einerseits eine Art Sollbruchstelle darstellen soll, aber andererseits allen verkehrsmässigen Belastungen gewachsen sein muss. Zudem ist eine Verbindung der beiden Hauptbaugruppen des Fahrzeuges nur an einigen Punkten möglich und beabsichtigt, was die Gesamt-stabilität des Fahrzeuges negativ beeinflusst.

### Darstellung der Erfindung

Die Erfindung vermeidet diese wesentlichen Nachteile. Es liegt ihr die Aufgabe zugrunde, ein Motorfahrzeug anzugeben, bei welchem einerseits bei einem Zusammenstoss der Triebsatz unter der Fahrgastzelle bleiben und nicht in diese eindringen oder diese verkleinern kann und andererseits dennoch ausreichend Knautschraum der Karosserie vorhanden ist.

Die Lösung dieser Aufgabe wird mit den Merkmalen des Kennzeichens von Anspruch 1 umschrieben. Vorteilhafte weitere Merkmale sind in den abhängigen Ansprüchen 2 ff angegeben.

### Kurze Beschreibung der Zeichnung

Weitere Merkmale und Vorteile ergeben sich aus der Beschreibung eines Ausführungsbeispiels anhand er Zeichnung. In dieser zeigt
- Fig. 1: den Vorderteil eines Kleinautos in Seitenansicht,
- Fig. 1A: den Triebsatz von unten zum Fahrzeug nach Fig. 1,
- Fig. 2, 2B und 2C: ein Kleinauto mit Insassen in Seitenansicht,
- Fig. 2A: den Triebsatz von unten zum Fahrzeug nach Fig. 2,
- Fig. 3: die halbe Heckansicht des Fahrzeugs nach Fig. 2,
- Fig. 4: ein Kleinstauto mit Insassen in Seitenansicht,
- Fig. 4A: den Triebsatz von unten zum Fahrzeug nach Fig. 4,
- Fig. 5: die Parkierverhältnisse mit dem erfindungsgemässen Fahrzeug.

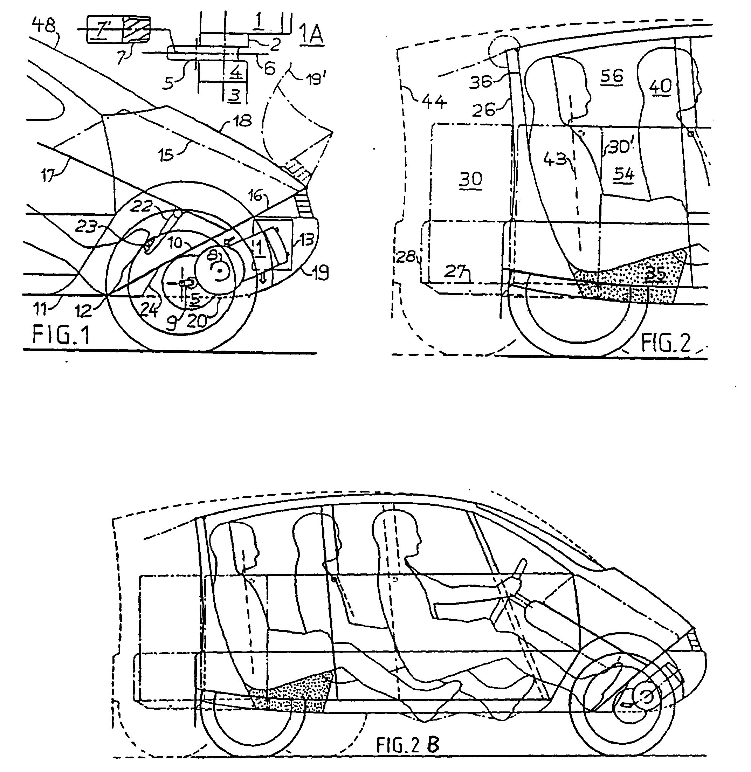

Fig. 1 und 1 A zeigen den Unterflureinbau der Antriebseinheit vor der Vorderachse in geneigter Lage (oder horizontal vor der Hinterachse). Diese Einheit besteht aus dem obenerwähnten Motor 1 mit Kupplung 2, Dynastarter 3, Getriebe 4 (vorzugsweise als Automat in Planeten- oder Dreiwellenanordnung mit direktem Gang) und Achsantrieb 5 mit Differential. Dessen Ausgleichsräder 7 (vergrössert dargestellt) sind nur einseitig gelagert, aber in grösserer Anzahl (z.B. 6 bis 12) vorhanden, was eine einfache Differentialbremse ergibt, deren Wirkung sich durch entsprechende Wahl von Länge und Durchmesser des Lagerzapfens 7' variieren lässt. Gemäss Drehpfeil 8 rotiert der Motor rückwärts, wodurch seine Kreiselwirkung die Kurvenneigung des Fahrzeugs automatisch verringert (statt, wie heute üblich, verstärkt). Dank der hohen Leistungsdichte des Motors 1 (Nennleistung 22 kW = 30 PS je Zylinder von 250 cm³ bei nur 14 m/s mittlerer Kolbengeschwindigkeit) genügen hier 2 = 4 Zylinder vollauf. Auch mit 3 = 6 Zylindern ist eine zentrale Einbaulage des Achsgetriebes 5mit beidseitig gleichlangen Antriebswellen 9 ohne weiteres möglich. Der Triebsatz 1 bis 5 ist an der entsprechend steifen Spritzwand 10 vorzugsweise über Sollbruchstellen befestigt und weicht bei einem Frontalcrash nach hinten unter den Wagenboden 11 aus. Dadurch bleibt der gesamte Karosserievorderteil als 77 cm lange Knautschzone erhalten (gemessen bis Absatz 12 des Fahrerfusses), weil auch die Batterie 13 nach hinten-unten ausweicht.

Oberhalb des Triebsatzes 1 bis 5 ist ein vorzugsweise von innen offener und beladbarer Kofferraum 15 von 160 l angeordnet, der durch die Verlängerung 16 der Spritzwand 10, die Trennwand 17 und die vorzugsweise einteilige, festmontierte Fronthaube 18 gebildet wird. Die Strukturelemente 10 und 16 bis 18 sind als stufenweise verzögernde und über die ganze Fahrzeugbreite wirksame Knautschzone auszubilden. Der vordere Stossfänger 19 ist hochklappbar (19') und gibt auf voller Breite ungehinderten Zugang zur gesamten Antriebsmechanik sowie zur Bremsanlage, Batterie 13 und Elektronik. Der untere Kühlluftaustritt kann durch ein einfaches Mardergitter 20 abgedeckt werden.

Zur Vereinfachung der Bedienung sind sowohl eine automatische Kupplung als auch ein kombiniertes Gas- und Bremspedal 22 vorgesehen. Gasgeben geschieht über eine seitlich verschiebbare Pedalplatte 23, die durch leichtes Schwenken des Fusses nach rechts und/oder links auf elektronischem Wege die Einspritzventile steuert (Drive-by-wire). Loslassen des Pedals bewirt Motorleerlauf, Treten aktiviert zusätzlich die Bremsen. Dieses kombinierte Fahrpedal verhindert das ungewollte Gasgeben in Schreckmomenten und erhöht die aktive Sicherheit ganz wesentlich. Volles Durchtreten der Bremse wird durch die Fussmulde 24 der Spritzwand 10 erleichtert.

Dieser voll ausgenützte, kompakte Vorderwagen gemäss Fig. 1 ermöglicht ein erstaunlich geräumiges, fünfsitziges Kleinauto, das nur 330 cm lang und nur 140 cm breit ist, also einem japanischen Mikrocar entspricht. Fahrer und Beifahrer sitzen weit vorn (Absätze 12), die weiteren Insassen volle 80 cm dahinter auf drei Einzelsitzen, von denen der mittlere ausserdem um 40 cm nach hinten verschiebbar ist (sein Sitzkissen ist vorne schmäler als hinten). Beim Verschieben des Mittelsitzes nach hinten verkleinert sich der hintere Kofferraum von 320 auf 160 l, doch kommen die 160 l des Frontraums 15 dazu, was eine optimale Gewichtsverteilung und ein Kofferraumvolumen von zusammen 320 bis 480 l ergibt. Die aerodynamisch sehr günstige, langgestreckt wirkende Karosserie mit vier breiten Türen (vorn 100, hinten 80 cm) und sehr kurzen Ueberhängen (vorn 50, hinten 30 cm) wartet mit einem Radstand von 250 cm auf, was diesen "Mikrocar" zum Reisewagen macht. Daraus lasst sich leicht ein um 40 cm verkürzter Viersitzer ableiten, durch weiteres Verkürzen um 40 cm (die hinteren Seitentüren entfallen) entsteht ein 250 cm kurzer Stadtwagen, der sich knapp zum Querparkieren eignet. Erstaunlicherweise finden darin immer noch vier 180 cm grosse Menschen (und 220 l Gepäck) Platz, doch müssen die hinteren mit leicht gespreizten Beinen sitzen, was schmale Vordersitze bedingt. Für dieses Fahrzeug reicht ein Motor mit 1 = 2 Zylindern (250 cm³, 22 kW = 30 PS) vollauf, und ein Kurzstrecken-Hybridantrieb mittels längerem Dynastarter 3 und längerer Batterie 13 ware vernünftig. Aus der Standfläche von 3,5 m2 dieses Autos ergibt sich ein Platzbedarf von 0,88 m2/Person, der komfortable Fünfsitzer erreicht 0,92 m2/Person.

Interessant ist, dass dieses Konzept sich gut zum Storchenschnabeln eignet. Durch lineare Vergrösserung um beispielsweise 1/3 entsteht aus dem 330 cm kurzen, aber sehr geräumigen Fünfsitzer je nach Ausführung ein eleganter, dreisitziger Einvolumen-Van mit 5,5 m³ Laderaum (Aussenmasse 440 x 190 x 180 cm) oder ein königlicher RR, dessen ventilloser 4=8-Zylinder-2,4-Liter-Motor (Aussenmasse rund 40 x 40 x 20 cm) über "genügend" Leistung verfügt. Solche Fahrzeuge würden auch einen Stern verdienen.

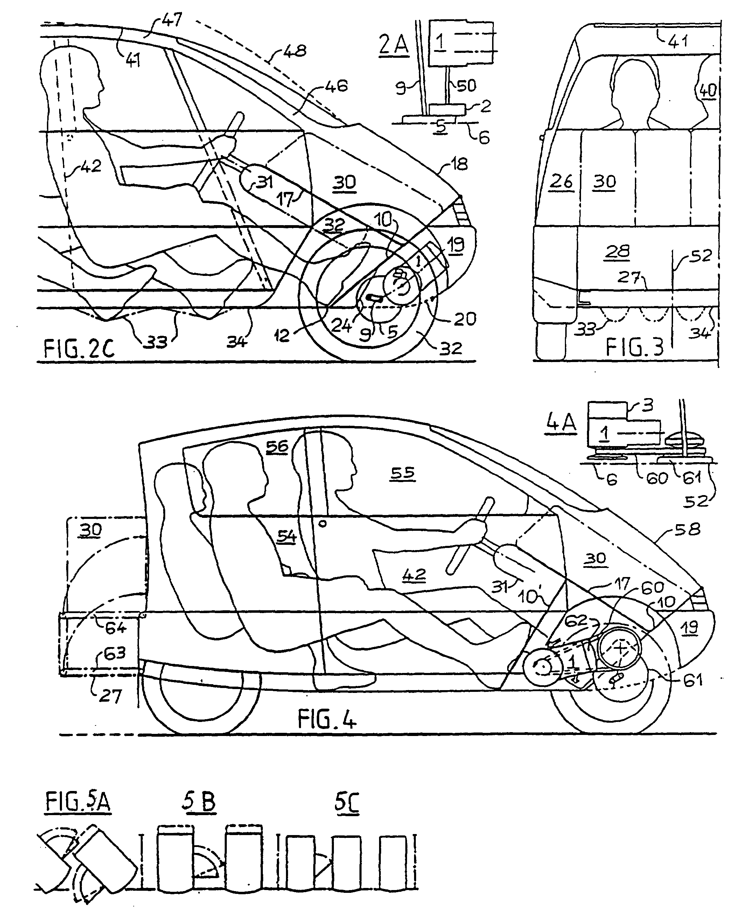

In analoger Weise wie Fig. 1 konzipiert, aber noch wesentlich kompakter ist der Fünfsitzer gemäss Fig. 2 und 3, dessen Standfläche nur 3,3 m2 beträgt (Länge 248, Breite 133 cm), was einen Platzbedarf von 0,66 m2/Person ergibt. Dies erfordert gegenüber Fig. 1 eine steilere Lage von Motor 1, Spritzwand 10 und Rückwand 26 mit äusserem, ausziehbarem Gepäckträger 27, der die hintere Knautschlänge auf 44 cm vergrössert (vorne sind es 55 cm). Die Betätigung des Gepäckträgers (Aus- und Einfahren mit jeweiligem Verriegeln) erfolgt von Hand oder elektrisch, hydraulisch oder pneumatisch (Auspuffgas) und ist nur bei Vollbesetzung nötig. Dieser Träger fasst funf Koffer oder Säcke 30 von 20 x 30 x 60 cm = 36 l, drei weitere, gleiche Bags finden auf der Trennwand 17 Platz, somit total 288 l bzw. dm³. Die Trennwand 17 endet in einem Bogen 31, der als Versteifung, Knieschutz und Träger für Instrumente und Ersatzrad (mit widerstands- und geräuscharmer schmalreifen 32) dient. Wie ersichtlich, sitzen auch bei Fig. 2 die Menschen in bequemer, entspannter Haltung, was zum Teil durch die tiefe Lage ihrer Füsse ermöglicht wird, die dank der elastischen Fusshalter 33 unterhalb des Fahrzeugbodens aufliegen. Hierzu weist der Boden 34 an den betreffenden Stellen langlochartige Oeffnungen auf, welche durch vorzugsweise aufgeklebte Gummistreifen wasserdicht und eben verschlossen sind. Gewebe- oder Drahtverstärkungen im Gummi erlauben ein zum Beispiel auf 5 cm beschränktes Durchfedern nach unten, wobei die auftretenden Materialbeanspruchungen viel kleiner sind als bei einer Reifenkarkasse.

Während die nicht gezeichneten Vordersitze von normaler, jedoch schmaler Bauart sind, bestehen aus Platzgründen die übrigen Sitze aus losen Schaumstoffkeilen 35 mit daran festen Rückenlehnen 36 aus zugfestem, eventuell gepolstertem Gewebe, die am Dachhimmel verstellbar eingehängt werden. Solche Sitze sind ausserordentlich leicht und kostengünstig und lassen sich im vorderen Kofferraum verstauen, wenn hinter den Vordersitzen Fracht befördert wird. Sie ermöglichen auch eine weitgehend freie Möblierung. So kann z.B., wie gezeichnet, die fünfte Person 40 in der Mitte der andern vier sitzen, jedoch auch ganz hinten, wobei die zwei hinteren Personen nach vorne rücken. Allerdings müssen sie dann die Beine leicht spreizen, was entsprechend schmale Vordersitze erfordert. Dafür haben hinten zwei zusätzliche Säcke 30' Platz, d.h. zwei Säcke pro Person (total 360 l). Zum Mitführen langer, leichter Lasten auf dem Dach ist dieses bis zu den gewölbten Rändern nur zweidimensional gekrümmt und kratzfest beschichtet, was Skiträger und deren aerodynamische Nachteile erspart. Der vordere Dachteil 41 ist anheb- und demontierbar und findet vor der Rückwand 26 gut Platz; er kann auch aus Glas oder Stoff bestehen. Auch dieses Auto ist in drei Längen vorgesehen. Der dargelegte, zweitürige Fünfsitzer (Länge 248, Radstand 180, Türbreite 120 cm) wird durch Verwendung von 90 cm breiten Türen 42 zum 218 cm kurzen Viersitzer (Standfläche 2,9 m2, Platzbedarf 0,72 m2/Person) und dieser durch zwei zusätzliche, 70 cm breite Türen 43 zum entsprechend längeren Sechssitzer in vier oder drei Reihen (Länge 288, Radstand 220 cm, Standfläche 3,8 m2, Platzbedarf 0,64 m2/Person). Mit gleichem Scheibenrahmen 46 und Dachvorderteil 47 (aber in steilerer Lage gemäss gleicher Frontscheibe 48 verschweisst) und mit einfachem Kastenaufbau wird er zum geräumigen Kleinkombi.

In Fig. 2 A ist der Triebsatz 1 bis 5 bis zur Fahrzeuglängsachse 6 von unten her skizziert. Der sehr kurze Motor (17 cm) mit 2 = 4 Zylindern von je 125 cm³ leistet dank seiner integrierten, volumetrischen Pleuellader 12,5 kW = 17 PS bei wiederum nur 14 m/s mittlerer Kolbengeschwindigkeit. Er ist hochelastisch an der Spritzwand aufgehängt und mit der Kupplung 2 durch eine flexible Verbundwerkstoff- oder Stahlwelle 50 (nötigenfalls Gelenkwelle) verbunden. Dies erlaubt eine relativ steife Aufhängung des Achsantriebs 5 und somit einfache Bedienungsgestänge.

Fig. 4 zeigt ein extrem kompaktes und aerodynamisch günstiges Kleinstauto, das nur 210 cm lang und 100 cm breit ist (Mittellinie 52 in Fig. 3) und trotzdem zwei Erwachsenen und einem Kind Platz bietet. Dazu sind der ultrakompakte Motor 1, die in Länge und Breite gestaffelte Sitzanordnung und sehr kleine Räder mit Schmalreifen nötig (das rechte Vorderrad ist demontiert). Die Karosserie besteht soweit als möglich aus Elementen des Fünfsitzers gemäss Fig. 2 (z.B. Türen 42, hintere Seitenteile 54, Seitenscheiben 55 und 56), jedoch sind die Fronthaube 58, die Spritzwand 10 (links) bzw. die entsprechend der Sitzstaffelung von 30 cm zurückgesetzte Spritzwand 10' (rechts) und die Trennwand 17 neu. Dadurch entsteht unter den Wänden 10' und 17 ein Motorraum, der den zurückversetzten Einzylindermotor (125 cm³) mitsamt stufenlosem Variator+Reduktionsgetriebe 61 aufnimmt. Rückwärtsfahren kann elektrisch durch Umpolen des Dynastarters 3 erfolgen. Nach Aufklappen des Stossfängers 19 (siehe Fig. 1) ist auch hier der ganze Triebsatz gut zugänglich. Insbesondere lässt sich der Keilriemen 60 und nach Lösen der vier Schrauben des Zylinderkopfs 62 und einer zentralen Schraube die rechteckige Kolbenplatte mitsamt Dichtelementen leicht auswechseln. Der hintere Gepäckträger 27 ist hier mittels kräftiger Parallelogrammstangen 63 und 64 abklappbar gestaltet und verlängert die hintere Knautschzone auf 46 cm (vorne links sind es 46 und rechts 76 cm). Er fasst drei Koffer oder Säcke 30, zwei weitere passen unter die Haube 58, was ein erstaunliches Gepäckvolumen von 180 dm³ ergibt. Die seitlichen Knautschzonen sind weniger stark gefordert, da erstens dieses Kleinstauto leer nur etwa 250 kg (der Motor 1 etwa 5 kg) und vollbesetzt etwa das Doppelte wiegt und zweitens mit seiner Spurweite von 90 cm (Radstand 150 cm) bei einem Seitencrash einfach umkippt, d.h. ausweicht. Auch dürfte die geringe Fahrzeugbreite von 100 cm durch seitliches Ausweichen manchen Crash verhindern. "Leicht und schmal" ist also gleichzeitig Bedingung und Resultat für das Konzept gemäss Fig. 4, was auch für die andern Ausführungsbeispiele gilt.

In Fig. 5 sind die Parkierverhältnisse für die genannten Fahrzeuge skizziert. So können zwei Stadtwagen nach Fig. 1 in schrägem Winkel bei einem Platzbedarf von maximal 5,5 x 2,5 m parkieren, wogegen beim Querparkieren ein Platzbedarf von 5 x 2 m bzw 5 x 2,3 m erforderlich ist. Andererseits hätten bei einem Platzbedarf von 5 x 2 m bereits drei der Kleinstautos gemäss Fig. 4 Platz.

Die dargestellten Personenfahrzeuge können natürlich auch als Nutzfahrzeuge ausgebildet sein.

Die Spritzwand kann auch z.B. durch Wellung versteift sein.

## Patentansprüche

1. Motorfahrzeug mit im Fahrzeugvorderteil angeordneter Spritzwand (10), die vom Wagenboden aus hinter und oberhalb der Vorderradachse (5) schräg nach vorn oben verläuft, wobei der Triebsatz (1) vor und unterhalb der Spritzwand (10) angeordnet ist, derart, dass im Crashfall der Triebsatz ohne Verkürzung der Knautschlänge nach hinten unten ausweichen kann.

2. Motorfahrzeug nach Patentanspruch 1, gekennzeichnet durch eine an die Spritzwand (10) anschliessende Trennwand (17), die quer zur Spritzwand (10) und im Winkel zu dieser aufsteigend nach hinten verläuft.

3. Motorfahrzeug nach Patentanspruch 2, gekennzeichnet durch eine an die Spritzwand (10) anschliessende Fronthaube (18), die sich bis zur Frontscheibe (48) erstreckt und seitlich bei den vorderen Türträgern endet, wobei der Raum zwischen Trennwand (17), einer Verlängerung (16) der Spritzwand (10) und der Fronthaube (18) als Gepäckraum dient.

4. Motorfahrzeug nach Patentanspruch 3, dadurch gekennzeichnet, dass die Fronthaube (18) fest mit angrenzenden Karosserieteilen verbunden ist, derart, dass sie zur Energieaufnahme der Knautschzone beiträgt, wobei der Zugang zum Gepäckraum vom Fahrzeuginneren erfolgt.

5. Motorfahrzeug nach Patentanspruch 1, gekennzeichnet durch einen im wesentlichen auf der Fahrzeugvorderseite sich über die ganze Fahrzeugbreite erstreckenden Stossfänger (19), der an eine Verlängerung (16) der Spritzwand (10) angelenkt ist und im hochgeklappten Zustand Zugang zum Triebsatz (1), zur Radmechanik, zu Bremsen etc. gewährt.

6. Motorfahrzeug nach Patentanspruch 1, dadurch gekennzeichnet, dass die Spritzwand (10) in seitlicher Richtung gestaffelt ist, dass weiter die Positionen von Fahrer und Beifahrer in Längsrichtung gestaffelt sind, und dass der Triebsatz (1) sich auf der Seite des nach hinten gestaffelten Teils der Spritzwand (10) befindet.

7. Motorfahrzeug nach Patentanspruch 2, dadurch gekennzeichnet, dass ein kombiniertes Gas- und Bremspedal (22) an der Trennwand (17) angelenkt ist, dessen Pedalplatte querbeweglich gelagert ist und dass Querbewegungen der Platte zur Leistungsregulierung des Triebsatzes dienen.

8. Motorfahrzeug nach Patentanspruch 1, dadurch gekennzeichnet, dass der Triebsatz (1) als Pendelkolbenmotor ausgebildet ist.

## Claims

1. Motor vehicle with a splash wall (10) arranged in the front part, which is arranged starting from the base of the vehicle runs obliquely at the rear and above the front axle (5) to the front and upwards, wherein the drive train (1) is arranged in front of and below the splash wall (10), in such a way that, in the event of a crash, the drive train can be deflected downwards and to the rear without shortening of the crushable length.

2. Motor vehicle according to Claim 1, characterised by a partition wall (17) connected to the splash wall (10) runs transverse to the splash wall (10) and at an angle thereto, rising to the rear.

3. Motor vehicle according to Claim 2, characterised by a front bonnet (18) connected to the splash wall (10), which extends as far as the windscreen (48) and ends laterally at the front door carriers, whereby the space between the partition wall (17), an extension (16) of the splash wall (10) and the bonnet (18) serves as a luggage compartment.

4. Motor vehicle according to Claim 3, characterised in that the bonnet (18) is securely connected to the adjacent bodywork sections in such a way that it contributes to the absorption of energy in the crushable zone, whereby access to the luggage compartment is effected from the interior.

5. Motor vehicle according to Claim 1, characterised by a bumper (19) extending essentially on the front of the vehicle over the entire width of the vehicle, which is connected by a joint to an extension (16) of the splash wall (10) and in the raised position provides access to the drive train (1), to the mechanical parts of the wheels, to the brakes, etc.

6. Motor vehicle according to Claim 1, characterised in that the splash wall (10) is stepped in the lateral direction, that, in addition, the positions of the driver and passenger are stepped in the longitudinal direction, and that the drive train (1) is located on the side of the part of the splash wall (10) stepped towards the rear.

7. Motor vehicle according to Claim 2, characterised in that a combined accelerator and brake pedal (22) is connected by a joint at the partition wall (17), the pedal plate of which is mounted on bearings such as to be capable of transverse movement, and that transverse movements of the plate serve to regulate the output of the drive train.

8. Motor vehicle according to Claim 1, characterised in that the drive train (1) is designed as a reciprocating piston engine.

## Revendications

1. Véhicule à moteur comportant un tablier d'auvent (10), qui est disposé dans la partie avant du véhicule et s'étend obliquement vers l'avant et vers le haut à partir du plancher du véhiculer, en arrière et au-dessus de l'essieu avant (5), l'ensemble moteur (1) étant disposé en avant et au-dessous du tablier d'auvent (10) de telle sorte que dans le cas d'un choc, l'ensemble moteur peut s'écarter vers le bas et vers l'arrière sans raccourcissement de la longueur de déformation.

2. Véhicule à moteur selon la revendication 1, caractérisé par une paroi de séparation (17), qui se raccorde au tablier d'auvent (10) et s'étend transversalement par rapport au tablier d'auvent (10) et sous un angle par rapport à ce tablier en remontant vers l'arrière.

3. Véhicule à moteur selon la revendication 2, caractérisé par un capot avant (18) qui se raccorde au tablier d'auvent (10) et s'étend jusqu'au pare-brise (48) et se termine latéralement au niveau des supports de ceinture avant, l'espace entre le tablier d'auvent (10) un prolongement (16) du tablier d'auvent (10) et le capot avant (18) étant utilisé en tant que coffre à bagages.

4. Véhicule à moteur selon la revendication 3, caractérisé en ce que le capot avant (18) est relié de façon fixe aux parties contiguës de la carrosserie de telle sorte qu'il contribue à absorber l'énergie de la zone déformable, l'accès au coffre à bagages s'effectuant à partir de l'intérieur du véhicule.

5. Véhicule à moteur selon la revendication 1, caractérisé par un pare-chocs (19), qui s'étend essentiellement sur le côté avant du véhicule sur toute la largeur de ce dernier et qui est articulé sur un prolongement (16) du tablier d'auvent (10) et garantit, à l'état relevé vers le haut, l'accès à l'ensemble moteur (1), au système mécanique des roues, aux freins, etc.

6. Véhicule à moteur selon la revendication 1, caractérisé en ce que le tablier d'auvent (10) est étagé dans sa direction latérale, qu'en outre la position du conducteur et du passager avant sont étagées dans la direction longitudinale et que l'ensemble moteur (1) est situé du côté de la partie, qui est étagée en étant reculée vers l'arrière, du tablier d'auvent (10).

7. Véhicule à moteur selon la revendication 2, caractérisé en ce qu'une pédale combinée d'accélérateur et de frein (22) est articulée sur le tablier d'auvent (17), la plaque de la pédale étant montée de manière à être déplaçable transversalement, et que des déplacements transversaux de la plaque sont utilisés pour régler la puissance de l'ensemble moteur.

8. Véhicule à moteur selon la revendication 1, caractérisé en ce que l'ensemble moteur est agencé sous la forme d'un moteur à piston pendulaire.
